# EUROPEAN PATENT APPLICATION

(11) **EP 2 012 202 A1**
(43) Date of publication of application: **07.01.2009**
(21) Application number: 07111934.1
(22) Date of filing: 06.07.2007
(51) Int. Cl.: G05B 19/042

(54) **Measurement device emulates a mass storage device**

(71) Applicant: Sysopen Digia Oyj, 00380 Helsinki (FI)
(72) Inventor: Haakana, Jaakko, 01200 Vantaa (FI)
(74) Representative: Pykälä, Timo Tapani

(57) **Abstract**

A measurement device, computer, computer programs, and a method for controlling the measurement device are disclosed. The method comprises: creating (202) measurement data from an object; controlling (204) the creation of the measurement data by control data; storing (206) the measurement data with double buffering; storing (208) the control data in a register; emulating (210) a mass storage device so that write and read operations of the measurement data and the control data are processed as write and read operations of memory blocks of the mass storage device; and transferring (212) the measurement data to a computer and the control data to and from the computer as the memory blocks of the mass storage device.

## Description

### Field

The invention relates to control of a measurement device.

### Background

A measurement device transfers a large amount of measurement data to a computer, for storage or real-time processing purposes, for example. The measurement relates to video capturing or industrial measurement, for example.

Expensive custom measurement or signal processing cards installed in the computer are typically used for these purposes. Additionally, these solutions provide non-standard application programming interfaces (API) and require special device drivers to be installed in an operating system of the computer.

### Brief description

The invention is defined in the independent claims.

### List of drawings

Embodiments of the present invention are described below, by way of example only, with reference to the accompanying drawings, in which
Figure 1 illustrates embodiments of a measurement device and a computer; and
Figure 2 illustrates a method for controlling a measurement device.

### Description of embodiments

The following embodiments are exemplary. Although the specification may refer to "an", "one", or "some" embodiment(s) in several places, this does not necessarily mean that each such reference is to the same embodiment(s), or that the feature only applies to a single embodiment. Single features of different embodiments may also be combined to provide other embodiments.

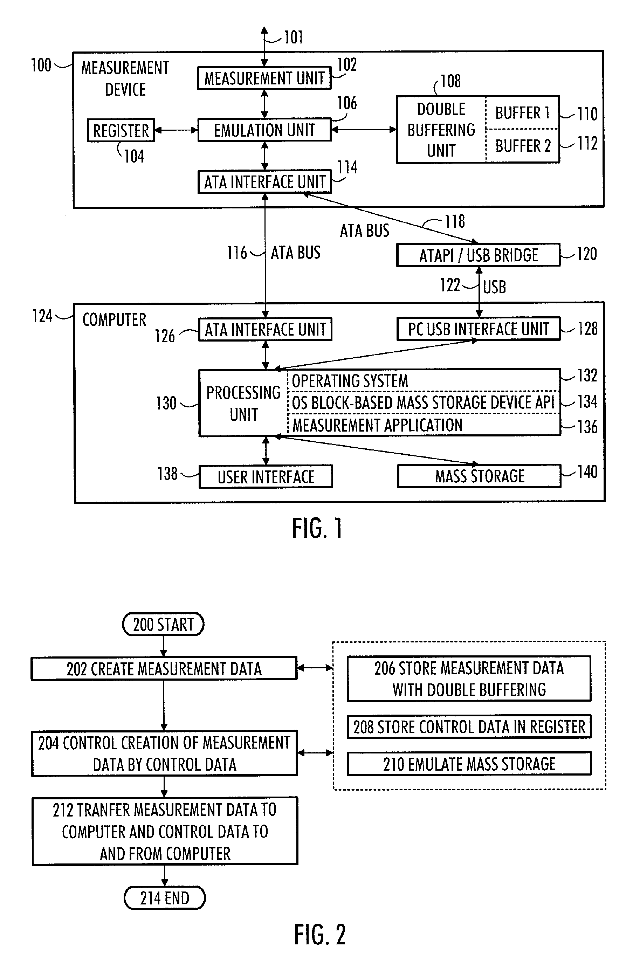

In Figure 1, embodiments of a measurement device 100 and a computer 124 are illustrated. Although the measurement device 100 and the computer 124 have been depicted as one entity each, they may be implemented in one or more physical or logical entities.

The measurement device 100 may be an independent device, possibly encased in an own housing and even provided with a power source, or it may be a computer plug-in card.

The measurement device 100 comprises a measurement unit 102 configured to create measurement data from an object, and to control the creation of the measurement data by control data. The interaction 101 with the measured object may be only one-way, i.e. the measurement unit 102 receives data from the measured object, or the interaction 101 may be two-way, i.e. the measurement unit 102 receives data from the measured object and also inputs data to the measured object. The measured object may be an industrial process, an industrial apparatus, data (such as video data, cellular radio system data, etc.), or some other object that may be measured with the measurement device 102 illustrated in Figure 1.

The measurement unit 102 may be a suitable measurement circuitry, such as an application-specific integrated circuit (ASIC), integrated circuit (IC), or processor with measurement software, capable of interacting with the measured object. The measurement unit 102 may also comprise suitable interface technology, with which the measurement unit 102 is coupled with the measured object. The suitable interface technologies may include as a protocol a message interface, a method interface, a sub-routine call interface, a block interface, or any means enabling data transfer from the measured object to the measurement unit 102, and as a hardware interface any suitable electrical connector or wireless communication technology, for example.

The measurement device 100 also comprises a double buffering unit 108 configured to store the measurement data. The measurement device 100 also comprises a register 104 configured to store the control data. The register 104 may be measured by the number of bits it can hold, for example, an "8-bit register" or a "32-bit register"; herein the register 104 refers to at least one such register or to a plurality of such registers. Double buffering may use two separate buffers 110, 112 in parallel: while the first buffer 110 is written (by the measurement unit 102), the second buffer 112 is read (by the computer 124), and while the second buffer 112 is read (by the computer 124), the first buffer 110 is written (by the measurement unit 102). The buffer 110, 112 is a region of memory used to temporarily hold the measurement data while it is being moved from the measurement device 100 to the computer 124. Variations of the double buffering utilizing more than two buffers 110, 112 may also be used, if needed due to speed and/or capacity reasons, for example. The buffers 110, 112 and the register 104 may be implemented as SRAM (Static Random Access Memory) or SDRAM (Synchronous Dynamic Random Access Memory), for example, or other suitable type of memory.

The measurement device 100 also comprises an emulation unit 106 configured to emulate a mass storage device so that write and read operations of the measurement data and the control data to and from the double buffering unit 108 and the register 104 are processed as write and read operations of memory blocks of the mass storage device. The emulation refers to the fact that the emulation unit 106 duplicates the functions of the mass storage device so that the measurement device 100 behaves like and appears to be the mass storage device. The focus is on exact reproduction of external behaviour. The mass storage device refers to storage of large amounts of information in a persisting and machine-readable fashion. Storage media for the mass storage device may include hard discs, for example. The hard disc may be a part of a hard disc drive. The storage medium may be permanently sealed inside the drive, or it may be replaced with varying levels of difficulty. The storage media does not include random access memory (RAM), which is volatile, i.e. RAM loses its contents after a power loss.

The measurement device 100 also comprises an advanced technology attachment bus interface unit 114 configured to transfer the measurement data to a computer 124 and the control data to and from the computer 124 as the memory blocks of the mass storage device. The measurement device 100 and the computer 124 are coupled by an advanced technology attachment bus 116.

The advanced technology attachment (ATA) is a standard interface for connecting storage devices, such as hard discs and CD-ROM drives inside personal computers. Many synonyms and near-synonyms for ATA exist: IDE (Integrated Drive Electronics) and ATAPI (AT Attachment Packet Interface), for example. With the introduction of SATA (Serial ATA), the original ATA was retroactively renamed PATA (Parallel ATA).

In fact, the measurement device 100 has the appearance of a hard disc drive from the point of view of a measurement application 136 running in the computer 124. Naturally, the measurement application 136 knows that the measurement device 100 is really a measurement device and not a hard disc drive, but the measurement data and the control data may be handled easily as read and write operations of the mass storage device. It should be appreciated that the measurement device 100 may also comprise other units than those described in Figure 1. However, they are irrelevant to the embodiments and, therefore, they need not be discussed in more detail here. The measurement device 100 may be built as a replacement for a hard disc drive, which may be plugged straight into a personal computer 124.

The computer 124 comprises an advanced technology attachment bus interface unit 126 configured to receive measurement data from the measurement device 100 as memory blocks of a mass storage device, and to transfer control data to and from the measurement device as further memory blocks of the mass storage device. The measurement data may be any data produced by the measurement device 100 on the measured object. The control data may be any data used to control the operation of the measurement device 100 by the computer 124: settings and commands for the measurement unit 102, and control and status information for the advanced technology attachment interface unit 114, for example.

The computer 124 also comprises a processing unit 130 configured to process the measurement data as the memory blocks of the mass storage device and to create the control data controlling creation of the measurement data by the measurement device as further memory blocks of the mass storage device.

The computer 124 may be implemented as an electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler.

The computer 124 may also have an operating system 132, which may provide system services to a computer program written with the program instructions. One such system service may include an operating system based mass storage device API 134. The measurement application 136 may access the measurement device 100 as if it were a hard disc drive, i.e. the measurement application 136 may read data from the measurement device 100 utilizing the mass storage device API 134 as if reading consecutive memory blocks from the mass storage device. Correspondingly, the measurement application 136 may write data to the measurement device 100 as if writing consecutive memory blocks to the mass storage device.

In the Microsoft Windows operating system, a method is provided in its Win32 API for reading and writing sectors on a partition in a mass storage device (see http://support.microsoft.com/kb/q100027/). The following Windows code fragment opens a file handle, which may be used to read the C:\drive contents, regardless of the file system:
HANDLE disc = CreateFile("\\\\.\\%c:", GENERIC_READ,
   FILE_SHARE_READ|FILE_SHARE_WRITE,
   NULL, OPEN_EXISTING, FILE_ATTRIBUTE_NORMAL, 0);

A similar API also exists in other operating systems, such as Linux and Mac OS X.

The computer 124 may also comprise various other parts, such as a user interface 138 and a mass storage device 140, not described further here, as such information is readily available for a skilled person. The user interface 138 may be used to interact with the measurement application 136 and therefore with the measurement device 100. The mass storage device 140 may be used to store the measurement data, the results obtained from processing the measurement data, and the control data of the measurement device 100.

An embodiment provides a computer program comprising program instructions which, when loaded into the computer 124, constitute the units 126, 130. The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer 124 or it may be distributed amongst a number of computers.

The measurement device 100 may also be implemented as a computer, but it may also be implemented as one or more integrated circuits, such as application-specific integrated circuits ASIC. Other hardware embodiments are also feasible, such as a circuit built of separate logic components: FPGA (Field-Programmable Gate Array) for example. A hybrid of these different implementations is also feasible. When selecting the method of implementation, a person skilled in the art will consider the requirements set for the size and power consumption of the measurement device 100, necessary processing capacity, production costs, and production volumes, for example. If the measurement device 100 is implemented as a computer, an embodiment may provide a computer program comprising program instructions which, when loaded into the measurement device 100, constitute the units 102, 106, 108, 114.

In an embodiment, the emulation unit 106 is further configured to transfer an interrupt via the advanced technology attachment bus interface unit 114 to the computer 124 when the measurement data is stored in the double buffering unit 108. The processing unit 130 is further configured to receive the interrupt via the advanced technology attachment bus interface unit 126 from the measurement device 100, and to read the measurement data from the measurement device 100 as the memory blocks of the mass storage device. The interrupt refers to an asynchronous signal from hardware indicating the need for attention or to a synchronous event in software indicating the need for a change in the execution. Either way, an interrupt request (IRQ) signals for the computer 124 that one of the buffers 110, 112 needs to be read.

In an embodiment, the emulation unit 106 is further configured to utilize a programmed input/output protocol (PIO) for data transfer to and from the computer 124. Correspondingly, the processing unit 124 is further configured to utilize the programmed input/output protocol for data transfer to and from the measurement device 124. PIO may be a protocol for data transfer involving the use of the CPU of the computer 124.

In another embodiment, the emulation unit 106 is further configured to utilize a direct memory access (DMA) protocol for data transfer to and from the computer 124. Correspondingly, the processing unit 130 is further configured to utilize the direct memory access protocol for data transfer to and from the measurement device 100. DMA may be a protocol for data transfer directly to and from RAM of the computer 124.

In an embodiment, an ATAPI/USB bridge 120 may be used to couple the measurement device 100 with a USB (Universal Serial Bus) interface of the computer. The ATAPI/USB bridge 120 may offer a low-cost, high-speed, plug-and-play interface for the measurement device 100 to interface with the computer 124. The ATAPI/USB bridge 120 may transform an ATA bus 118 to a USB bus 122. The computer 128 may comprise a USB interface unit 128 coupled with the processing unit 130, instead of the ATA interface unit 126.

In an embodiment, the measurement appears externally as if the computer 124 were interacting with a hard disc. The computer 124 may write a measurement command in an emulated (hard disc) sector 0 of the measurement device 100, i.e. in one 110 of the buffers. Next, the computer 124 performs a (hard disc) read operation for the emulated sector 1. The measurement device 100 notices these two operations, and concludes that it may start measuring an object. Consequently, the measurement device 100 starts to fill one 110 of the buffers with measurement data. When the buffer 110 is full, the measurement device 100 may give an interrupt request for the computer 124 through the ATA bus 116, and the computer 124 starts to read the filled buffer 110. Simultaneously, the measurement device 100 starts to fill the yet unused buffer 112. When the unused buffer 112 becomes full, the measurement device 100 may give an interrupt for the computer 124 so that the computer 124 may read the newly filled buffer 112. Simultaneously, the measurement device 100 starts to fill the previously read buffer 110. This double buffering is continued as long as the measurement is ongoing. From the computer's 124 point of view it appears as if it were reading the measurement data from consecutive sector addresses, but in fact the measurement device 100 only fills two (or more, if needed) buffers 110, 112. An address mapping [0,n] -> [1,m] may be used, where n is the number of virtual sectors seen by the computer 124, and m (=2, for example) is the number of buffers. The measurement device 100 appears as a big mass storage device for the computer 124: it appears as if the measurement data may be read from sectors having consecutive addresses, whereas in reality the measurement data is transferred using double buffering.

Next, a method for controlling a measurement device will be described with reference to Figure 2. The method starts in 200.

In 202, measurement data from an object is created.

In 204, the creation of the measurement data is controlled by control data.

As illustrated in Figure 2, operations 206, 208 and 210 are used in connection with the operations 202 and 204.

In 206, the measurement data is stored with double buffering.

In 208, the control data is stored in a register.

In 210, a mass storage device is emulated so that write and read operations of the measurement data and the control data are processed as write and read operations of memory blocks of the mass storage device.

In 212, the measurement data is transferred to a computer as the memory blocks of the mass storage device, and the control data is transferred to and from the computer as the memory blocks of the mass storage device.

The method ends in 214.

The operations described above in Figure 2 are in no absolute chronological order, and some of the operations may be performed simultaneously or in an order differing from the given one. Other functions can also be executed between the operations or within the operations. The embodiments disclosed with reference to Figure 1 may be used to enhance the method described in Figure 2.

It will be obvious to a person skilled in the art that, as technology advances, the inventive concept can be implemented in various ways. The invention and its embodiments are not limited to the examples described above but may vary within the scope of the claims.

## Claims

1. A measurement device comprising:
a measurement unit configured to create measurement data from an object, and to control the creation of the measurement data by control data;
a double buffering unit configured to store the measurement data;
a register configured to store the control data; and
an emulation unit configured to emulate a mass storage device so that write and read operations of the measurement data and the control data to and from the double buffering unit and the register are processed as write and read operations of memory blocks of the mass storage device; and
an advanced technology attachment bus interface unit configured to transfer the measurement data to a computer and the control data to and from the computer as the memory blocks of the mass storage device.

2. The device of claim 1, wherein the emulation unit is further configured to transfer an interrupt via the advanced technology attachment bus interface unit to the computer when the measurement data is stored in the double buffering unit.

3. The device of claim 1 or 2, wherein the emulation unit is further configured to utilize a programmed input/output protocol for data transfer to and from the computer.

4. The device of claim 1 or 2, wherein the emulation unit is further configured to utilize a direct memory access protocol for data transfer to and from the computer.

5. A computer program comprising program instructions which, when loaded into the measurement device, constitute the units of any preceding claim 1 to 4.

6. A computer comprising:
an advanced technology attachment bus interface unit configured to receive measurement data from a measurement device as memory blocks of a mass storage device, and to transfer control data to and from the measurement device as further memory blocks of the mass storage device; and
a processing unit configured to process the measurement data as the memory blocks of the mass storage device and to create the control data controlling creation of the measurement data by the measurement device as further memory blocks of the mass storage device.

7. The computer of claim 6, wherein the processing unit is further configured to receive an interrupt via the advanced technology attachment bus interface unit from the measurement device, and to read the measurement data from the measurement device as the memory blocks of the mass storage device.

8. The computer of claim 6 or 7, wherein the processing unit is further configured to utilize a programmed input/output protocol for data transfer to and from the measurement device.

9. The computer of claim 6 or 7, wherein the processing unit is further configured to utilize a direct memory access protocol for data transfer to and from the measurement device.

10. A computer program comprising program instructions which, when loaded into the computer, constitute the units of any preceding claim 6 to 9.

11. A method for controlling a measurement device, comprising:
creating measurement data from an object;
controlling the creation of the measurement data by control data;
storing the measurement data with double buffering;
storing the control data in a register;
emulating a mass storage device so that write and read operations of the measurement data and the control data are processed as write and read operations of memory blocks of the mass storage device; and
transferring the measurement data to a computer and the control data to and from the computer as the memory blocks of the mass storage device.

12. A measurement device comprising:
means for creating measurement data from an object;
means for controlling the creation of the measurement data by control data;
means for storing the measurement data with double buffering;
means for storing the control data;
means for emulating a mass storage device so that write and read operations of the measurement data and the control data are processed as write and read operations of memory blocks of the mass storage device; and
means for transferring the measurement data to a computer and the control data to and from the computer in an advanced technology attachment bus as the memory blocks of the mass storage device.

13. A computer comprising:
means for receiving measurement data from a measurement device in an advanced technology attachment bus as memory blocks of a mass storage device;
means for transferring control data to and from the measurement device in the advanced technology attachment bus as further memory blocks of the mass storage device;
means for processing the measurement data as the memory blocks of the mass storage device; and
means for creating the control data controlling creation of the measurement data by the measurement device as further memory blocks of the mass storage device.
